# EUROPEAN PATENT SPECIFICATION

(11) **EP 2 213 409 B1**
(45) Date of publication and mention of the grant of the patent: **12.04.2017**
(21) Application number: 09001381.4
(22) Date of filing: 02.02.2009
(51) Int. Cl.: B23P 19/06, B25J 9/16, B65D 77/04, B23P 19/10

(54) **System and method for the automation by means of robots of the assembling of the pallet and the cage in palletized and caged containers**
System und Verfahren zur Automatisierung der Montage der Palette und des Schutzkorbes in Palettenbehältern mit Schutzkorb mittels Roboter
Système et procédé d'automatisation au moyen de robots pour l'assemblage de la palette et de la cage dans des conteneurs palettisés avec cage de protection

(43) Date of publication of application: 04.08.2010
(73) Proprietor: REYDE, S.A., 08820 El Prat de LLobregat Barcelona (ES)
(72) Inventor: De Lamo Navarro, Carlos, 08820 El Prat de Llobregat (Barcelon) (ES)
(74) Representative: Canela Giménez, Teresa

(56) References cited:
- JP-A- 4 315 531
- JP-A- 7 024 765
- JP-A- 10 138 057
- JP-A- 2003 225 837
- US-A- 5 608 847
- US-B1- 6 378 183

## Description

### FIELD OF THE INVENTION

The present invention relates to a system for the assembling of large sized palletized caged containers and particularly refers to the coupling stage of the cage to the pallet surface supporting said cage by devising a procedure for use of this invention for mass production purposes by means of robotized arms or the like. The present invention also relates to a method for assembling large sized palletized caged containers by using such a system.

### PRIOR ART

Palletized caged containers made of different types of materials are known, said containers being primarily made of plastic, said metal cage of steel and said pallets of wood, although nowadays they are made of the most diverse materials by replacing wood or steel by different types of plastics or compounds.

Manufacture in chain assemblies requires an efficient division of the tasks involved in the construction processes with the purpose of mechanizing them and assigning as few tasks as possible to operators. Generally, the tasks that usually still require the manipulation of operators, other than supervising and controlling the functioning of the line, are related to processes that are hard to mechanize either because their parameters are variable or because of the type of manipulation that the products in question must undergo. It is an object of the present invention to automate the stage of the manufacturing process of palletized and caged containers involved firstly in the coupling of the cage to the pallet by suitably placing the cage, which can be made of metal for instance, once centered onto said pallet, made of wood for instance, secondly to perform the perforations in the cage reaching into the pallet and finally to insert the bolts into said orifices for fixing the cage to the pallet.

Traditionally, mechanized performance of orifices and placement of screws have been and still are hard to implement in certain technical fields. It is a fact that, upon parametrization, manufacturing tolerances of many objects do not permit on occasion their being mechanically drilled as a consequence of said manufacturing tolerances. That is the case with the cages in this type of containers, which are manufactured through folding and welding of hollow steel tubing, in case this material is used, and invariably feature minor structural finishing variations.

US6378183 describes a system like the one just described above for making a cistern where two units perform a specialized operation, drilling or screwing, and where all the drilling and screwing operations are established at preset and fixed points, without any detection capability and adaptation to possible differences between pallets or cages of these containers.

Documents JP10138057, JP4315531 and JP7024765 describe robots for performing screwing operations in previously detected holes, to assembly parts, but without properly positioning the objects to be joined, or without determining the optimum position of the holes. They do not make the holes in which subsequently the screwing is made.

Another hindrance for the mechanization of these operations is the required specialization of each function, inasmuch as perforating or drilling are tasks that are substantially different from fitting a bolt or driving in screws.

Another inconveniency of this type of operations is that drilling residues in the form of dust or strips of material, depending on the materials of which the pallet and the cage are made, are left on the pallet and cage surfaces, drilling residues being generally undesirable and becoming an annoying inconvenience in assembly lines since they get scattered all over the facilities and disturb other production tasks by contaminating and deteriorating both the end product and the production tools and creating, in short, an unhealthy, dirty and undesirable working environment.

The present invention is intended for overcoming said inconveniencies in the field of the manufacture of palletized and caged containers by providing a manufacturing method that permits their complete automation in a productive and efficient way.

### BRIEF EXPLANATION OF THE INVENTION

The present invention describes a system for the automation by means of robots of the assembling of the pallet and the cage in palletized and caged containers, this system being also applicable to components of different materials (wood, metal, plastic, etc.) and allowing performance of the operations in an automated way through robotic arms or the like working cooperatively.

The system of the invention firstly divides the task of performing the coupling of the cage and the pallet in different stages, two of these stages, namely, drilling and screwing being performed by various automated means, which are robotized arms in the preferred embodiment, whose operations register their parameters, which parameters are then transferred to the next stage.

One of the operations is the mapping and/or the drilling of the orifices and the next operation is the insertion of suitable bolts into said orifices for which operation the automation means, a second robotic arm in the preferred embodiment, utilizes the mapping carried out by the first robot that is next transmitted to the system in order to automatically insert the bolts into said orifices.

This course of action has the advantages of both efficiently separating the drilling from the screwing operation and permitting the suppression of the task of a second inspection of the piece to be assembled aimed at locating the positions where the bolts or screws are to be inserted.

These and other advantages of the present invention will become more apparent from the description of same that is part of the present specification.

### BRIEF EXPLANATION OF THE DRAWINGS

For a better understanding of the invention the present specification is accompanied by one sheet of drawings intended merely to illustrate and not to limit the invention.

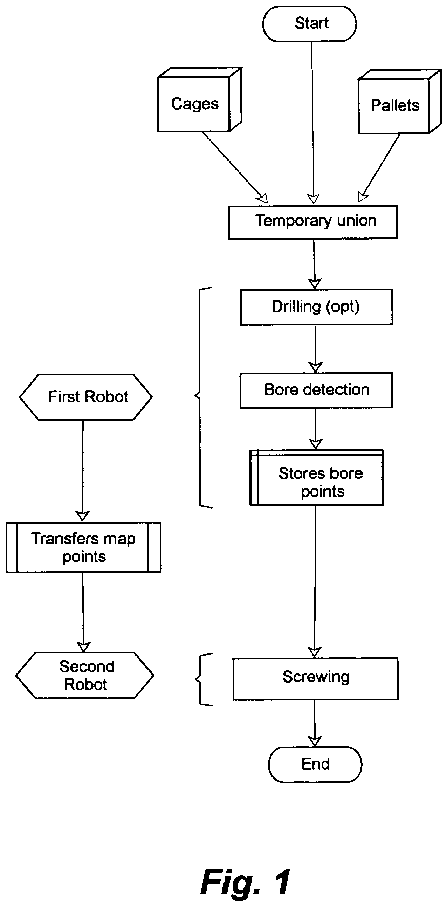

Figure 1 is a block diagram summarizing the operations comprised in the system of the invention.

### DETAILED EXPLANATION OF THE INVENTION

The present invention consists in a system for the automation by means of robots of the assembling of the pallet and the cage in palletized and caged containers, this system being also applicable to components of different materials (wood, metal, plastic, etc.) and allowing performance of the operations in an automated way by robotic arms or the like working cooperatively.

In the preferred embodiment it is utilized a wood pallet and a metal cage made of steel tubing forming a mesh. The initial stage of the productive process comprises a mesh or metal cage, on the one hand, and wood pallets, on the other hand.

Use is made of a functional division comprising a first coupling stage by mechanical means of the cage, which is placed and centered on the pallet. That can be performed through a robotized arm, for instance the same one that will later on drill the assembly by mechanical means or a combination of a robot and mechanical means.

The preferred embodiment contemplates performing at this stage perforations into the upper surfaces of the cage tubing that is in contact with the pallet, said orifices being intended to reach the pallet surface. The performance of said orifices is to take place upon a mechanical/visual inspection (through contact elements that determine the distance between the drilling arm of the tubing and the pallet, video cameras provided with optical inspection means for analyzing surfaces and distances or any other known means in the art aiming at performing the drilling at optimum places.

Although the preferred embodiment drills the lower tubing of the cage at preconfigured points, for instance at the four corners and the middle points of said tubing by means of both a robotized arm that detects by contact the suitable positions and stretchers or separators, the system also contemplates direct perforation of all the orifices of said cage tubing at a stage prior to the manufacturing stage, said stage consisting then in the mapping of said perforation points.

With the above second mode of execution the growing amounts of drilling residues can be avoided since drilling is performed at an earlier stage in controlled conditions that prevent the scattering thereof.

Mapping of the perforation points consists in determining their coordinates (x, y) relative to a virtual coordinate axes related to one of the ends of the pallet. Once determined the "pallet-cage" relation, said coordinates accurately describe the perforation points that can be later efficiently reproduced inasmuch as the position of the pallet, which is actually a frame of reference, is used to place the coordinate axes from which said measurements have been carried out.

The first robot, robotized arm or any other actuating element transfers to the control means of the assembly and to the second actuating element the data from the mapping performed on the pallet, so that said actuating element, whose specialized function is fitting bolts and screws, simply retrieves the data received, deciphers the encoded positions of every orifice and places the bolt on them, thereby securely fixing the cage and the pallet. This operation is repeated with as many screws and bolts deemed necessary to fix the assembly.

It must be pointed out that a robotized screwing arm can, without losing efficiency and in accordance with the known art, manipulate screws of different sizes, configurations and lengths, this making the use of the system of the present invention flexible.

Finally, once performed the operation of fixing the cage to the pallet, the assembly is conveyed to another stage in the assembly line.

It is to be noted that the involvement in the invention of cooperative robots is greatly effort-saving, increases work efficiency and ensures better results. In the event that there was not exchange of information between the manufacturing stages and between the various robotic elements, the latter would have to be configured to incorporate a larger number of capabilities, perform a greater number of tasks and, generally speaking, repeat already completed processes, this all always resulting in a loss of efficiency.

It is understood that modifications and variations of the present invention are possible within the scope of the claims.

## Claims

1. SYSTEM FOR THE AUTOMATION BY MEANS OF ROBOTS OF THE ASSEMBLY OF THE PALLET AND THE CAGE IN PALLETIZED AND CAGED CONTAINERS, of the type used in an assembly line, said system being applicable to components of various materials such as wood, metal, plastic, etc., **CHARACTERIZED in that** it comprises at least two robotic units, the first robotic unit incorporating means, such as video cameras provided with optical inspection capabilities, butt ends, touch-sensitive accessories, separators, to detect those drilling operations if they have already been performed and to determine the suitable positions for said drilling operations if they have not already been performed, said first robotic unit being provided with suitable means for carrying out said drilling operations; the second robotic unit being provided with suitable means for carrying the insertion of the bolts or screws, into said drillings thereby fixing the assembly at mapped x,y positions received from the first robotic unit of suitable position holes of the drillings performed on the cage-pallet coupling, upon centering and fixing of said coupling by automatic means within the system.

2. SYSTEM FOR THE AUTOMATION BY MEANS OF ROBOTS OF THE ASSEMBLY OF THE PALLET AND THE CAGE IN PALLETIZED AND CAGED CONTAINERS, according to the previous claim, **CHARACTERIZED in that** any of said robotic units has means for manipulating and moving the cage-pallet assembly, both in its assembled condition and in its condition prior to assembling.

3. METHOD FOR THE AUTOMATION BY MEANS OF ROBOTS OF THE ASSEMBLY OF THE PALLET AND THE CAGE IN PALLETIZED AND CAGED CONTAINERS, **characterized by** using a system according to claims 1 or 2, the system comprising two robotic units, and by:
- receiving via the assembly line a pallet of any suitable material and a cage also of any suitable material, and particularly wood and metal, respectively;
- performing through mechanical operations a temporary coupling of the cage and the pallet at a position that will eventually become the permanent position, where said cage will suitably be centered on the pallet;
- having the first robotic unit detecting the drillings already made on the cage, or determining the suitable positions for the drilling operations if they have not been already made, and performing the drillings on said suitable positions;
- having said first robotic unit recording and storing the data regarding the location of the drillings for fixing the cage-pallet assembly;
- the fact that an ordered set of positions of the drillings are transferred by the present system to at least a second robotic unit intended for the screwing and the fixing of the joint;
- the fact that said second robotic unit performs the fitting of the bolts or screws, or any other similar suitable element in the positions received by the system.

## Patentansprüche

1. SYSTEM ZUR AUTOMATISIERUNG MITTELS ROBOTERN DER MONTAGE VON PALETTE UND GITTERAUFSATZ BEI GITTERBOXCONTAINERN, des Typs, der in einer Montagelinie verwendet wird, wobei besagtes System für Komponenten aus verschiedenen Materialien angewendet werden kann, wie zum Beispiel Holz, Metall, Kunststoff usw. **DADURCH GEKENNZEICHNET, dass** es mindestens zwei Robotereinheiten enthält, wobei die erste Robotereinheit mit Mitteln ausgestattet ist wie Videokameras, die sich zur optischen Inspektion eignen, Griffenden, berührungempfindlichem Zubehör, Trennvorrichtungen, um die Bohrvorgänge zu orten, wenn sie bereits ausgeführt wurden, und um die geeigneten Positionen für besagte Bohrvorgänge zu bestimmen, wenn sie noch nicht ausgeführt wurden, wobei besagte erste Robotereinheit mit geeigneten Mitteln ausgestattet ist, um besagte Bohrvorgänge auszuführen; wobei besagte zweite Robotereinheit mit geeigneten Mitteln ausgerüstet ist, um die Bolzen oder Schrauben in besagte Bohrungen einzusetzen, wodurch die Baugruppe auf der Verbindung von Gitteraufsatz und Palette an gemappten x-,y-Positionen befestigt wird, die von der ersten Robotereinheit als geeignete Positionen der ausgeführten Bohrungen empfangen wurden, nachdem besagte Verbindung durch im System befindliche automatische Mittel zentriert und befestigt wurde.

2. SYSTEM ZUR AUTOMATISIERUNG MITTELS ROBOTERN DER MONTAGE VON PALETTE UND GITTERAUFSATZ BEI GITTERBOXCONTAINERN nach vorstehendem Anspruch, **DADURCH GEKENNZEICHNET, dass** jede der besagten Robotereinheiten mit Mitteln versehen ist, um die Gitteraufsatz-Palette-Baugruppe zu manipulieren und zu bewegen, sowohl in montiertem Zustand als auch in dem Zustand vor der Montage.

3. METHODE ZUR AUTOMATISIERUNG MITTELS ROBOTERN DER MONTAGE VON PALETTE UND GITTERAUFSATZ BEI GITTERBOXCONTAINERN, charakterisiert durch Verwendung eines Systems nach Anspruch 1 oder Anspruch 2 und dadurch:
- dass über die Montagelinie eine Palette aus geeignetem Material und ein Gitteraufsatz, ebenfalls aus einem geeigneten Material, insbesondere Holz bzw. Metall angenommen wird;
- dass durch mechanische Vorgänge eine vorübergehend Verbindung von Gitteraufsatz und Palette an einer Position hergestellt wird, die am Ende die permanente Position sein wird, an der besagter Gitteraufsatz in geeigneter Form auf der Palette zentriert wird;
- dass die erste Robotereinheit veranlasst wird, die bereits auf dem Gitteraufsatz ausgeführten Bohrungen zu orten oder die geeignete Positionen für die Bohrvorgänge zu bestimmen, wenn noch keine Bohrungen ausgeführt wurden, und die Bohrungen an besagten geeigneten Positionen auszuführen;
- dass besagte Robotereinheit die Daten in Bezug auf die Lage der Bohrungen zur Befestigung der Gitteraufsatz-Palette-Baugruppe erfasst und speichert;
- durch die Tatsache, dass ein angeforderter Datensatz der Bohrungspositionen von dem vorliegenden System an mindestens eine zweite Robotereinheit übertragen wird, die zum Verschrauben und Befestigen der Verbindung bestimmt ist;
- durch die Tatsache, dass besagte zweite Robotereinheit die Befestigung der Bolzen oder Schrauben oder eines vergleichbaren geeigneten Elements an den Positionen ausführt, die von dem System empfangen wurden.

## Revendications

1. SYSTÈME DESTINÉ À AUTOMATISER, À L'AIDE DE ROBOTS, L'ASSEMBLAGE DE LA PALETTE ET DE LA CAGE DANS DES CONTENEURS CAGE PALETTISÉS, du type utilisé dans les chaînes de montage, système qui est applicable à des composants de différents matériaux tels que le bois, le métal, le plastique, etc. **CARACTÉRISÉ en ce qu'**il comprend au moins deux unités robotiques dont la première intègre des moyens tels que des caméras vidéo munies de capacités d'inspection optique, des butées, des accessoires tactiles, des séparateurs pour détecter les opérations de perçage si elles ont déjà été réalisées et pour déterminer les positions appropriées si ces opérations de perçage n'ont pas encore été réalisées, cette première unité robotique étant munie de moyens nécessaires pour exécuter ces opérations de perçage; la seconde unité robotique est équipée de moyens appropriés pour réaliser l'insertion de boulons ou de vis dans les orifices percés de sorte à fixer l'assemblage dans les positions x et y définies par la première unité robotique à partir des orifices appropriés du perçage réalisé sur le couplage cage-palette, après centrage et fixation dudit couplage à l'aide de moyens automatiques dans le système.

2. SYSTÈME DESTINÉ À AUTOMATISER, À L'AIDE DE ROBOTS, L'ASSEMBLAGE DE LA PALETTE ET DE LA CAGE DANS DES CONTENEURS CAGE PALETTISÉS, conformément à la revendication précédente, **CARACTÉRISÉ en ce que** ces unités robotiques sont équipées de moyens permettant de manipuler et de déplacer le couplage cage-palette, à la fois avant l'assemblage et une fois assemblé.

3. MÉTHODE CONCERNANT L'AUTOMATISATION, À L'AIDE DE ROBOTS, DE L'ASSEMBLAGE DE LA PALETTE ET DE LA CAGE DANS DES CONTENEURS CAGE PALETTISÉS, **caractérisée par** l'utilisation d'un système comprenant deux unités robotiques qui est conforme aux revendications 1 ou 2, et par :
- la réception via la chaîne de montage d'une palette fabriquée dans n'importe quel matériau approprié et d'une cage également fabriquée dans n'importe quel matériau approprié, en particulier et respectivement en bois et en métal;
- la réalisation à l'aide d'opérations mécaniques d'un couplage provisoire de la cage et de la palette dans une position qui pourra devenir la position définitive, à l'endroit où ladite cage sera centrée sur la palette;
- le fait que la première unité robotique détectera les perçages déjà réalisés sur la cage ou déterminera les positions appropriées pour les opérations de perçage si elles n'ont pas encore été réalisées, et exécutera les perçages auxdites positions appropriées;
- le fait que cette première unité robotique enregistrera et stockera les données concernant la position des perçages pour fixer le couple cage-palette.
- le fait qu'un ordre fixé de positions des perçages est transféré par ce système à au moins une seconde unité robotique afin de visser et de fixer l'union;
- le fait que la seconde unité robotique insère les boulons ou les vis ou tout autre élément semblable dans les positions indiquées par le système.
